# EUROPÄISCHE PATENTANMELDUNG

(11) **EP 0 949 432 A2**
(43) Veröffentlichungstag der Anmeldung: **13.10.1999**
(21) Anmeldenummer: 99105438.8
(22) Anmeldetag: 17.03.1999
(51) Int. Cl.: F16D 65/16, B60T 13/66

(54) **Fahrzeugbremse und automatische Feststellbremsvorrichtung**

(30) Priorität: 08.04.1998 DE 19815714
(71) Anmelder: DaimlerChrysler AG, 70567 Stuttgart (DE)
(72) Erfinder: Weihing, Erwin, 72250 Freudenstadt (DE)

(57) **Zusammenfassung**

Eine Fahrzeugbremse umfassend eine Bremsscheibe (30) und wenigstens einen über eine Betriebsbremsleitung (11) mit einem Hauptbremszylinder fluidisch verbundenen Radbremszylinder (10), der durch Beaufschlagung mit einem unter Druck stehenden Fluid über Bremsbeläge (20-25) eine Bremskraft auf die Bremsscheibe (30) ausübt, ist dadurch gekennzeichnet, daß eine weitere von der Betriebsbremsleitung (11) getrennte Feststellbremsleitung (12) vorgesehen ist, über welche der wenigstens eine Radbremszylinder (10) oder wenigstens ein weiterer zusätzlicher Radbremszylinder bei Betätigung einer Feststellbremseinrichtung mit unter Druck stehendem Fluid derart beaufschlagbar ist, daß über die Bremsbeläge (20-23) oder über zusätzliche Bremsbeläge (24,25) eine Feststellbremskraft auf die Bremsscheibe (30) ausgeübt wird.

## Beschreibung

Die Erfindung betrifft zunächst eine Fahrzeugbremse umfassend eine Bremsscheibe und Wenigstens einen über eine Betriebsbremsleitung mit einem Hauptbremszylinder fluidisch verbundenen Radbremszylinder, der durch Beaufschlagung mit einem unter Druck stehenden Fluid über Bremsbeläge eine Bremskraft auf die Bremsscheibe ausübt.

Derartige Fahrzeugbremsen, auch Scheibenbremsen genannt, werden heute bei den meisten Fahrzeugen eingesetzt. Sie sind bei fast allen Fahrzeugen an den Vorderrädern und bei einer großen Zahl von Fahrzeugen auch an den Hinterrädern vorgesehen.

Bei Fahrzeugen, die über vier Scheibenbremsen, d.h. über Scheibenbremsen sowohl an den Vorder- als auch an den Hinterrädern verfügen, wird eine von der Betriebsbremse unabhängig über einen Handbremshebel oder ein Fußpedal betätigbare Feststellbremse durch zusätzliche, an den Hinterrädern angeordnete Trommelbremsen realisiert.

Solche Trommelbremsen zeigen im Laufe der Zeit an der Bremstrommel Korrosionserscheinungen, die zu verminderten Bremswirkungen führen können.

Darüber hinaus sind bei derartigen Trommelbremsen bedingt durch die Zugbelastung des für ihre Betätigung erforderlichen Bremsseils in vielen Fällen ungleichmäßige Bremswirkungen festzustellen.

Dies hat einen erhöhten Wartungsaufwand der Feststellbremse zur Folge.

Aufgabe der Erfindung ist es daher, eine Fahrzeugbremse der gattungsgemäßen Art dahingehend weiterzubilden, daß sie eine über einen langen Zeitraum gleichbleibende Feststellbremswirkung ermöglicht, die insbesondere nicht durch durch Korrosionserscheinungen oder durch mechanische Beanspruchung ihrer Betätigungselemente hervorgerufene verminderte oder ungleichmäßige Bremswirkungen beeinträchtigt wird.

Diese Aufgabe wird bei einer Fahrzeugbremse der eingangs beschriebenen Art erfindungsgemäß dadurch gelöst, daß eine weitere von der Betriebsbremsleitung getrennte Feststellbremsleitung vorgesehen ist, über welche der wenigstens eine Radbremszylinder oder wenigstens ein weiterer zusätzlicher Radbremszylinder bei Betätigung einer Feststellbremseinrichtung derart mit unter Druck stehendem Fluid beaufschlagbar ist, daß über die Bremsbeläge oder über zusätzliche Bremsbeläge eine Feststellbremskraft auf die Bremsscheibe ausgeübt wird.

Durch die getrennte Feststellbremsleitung, über welche der Radbremszylinder der Betriebsbremse oder wenigstens ein weiterer zusätzlicher Radbremszylinder mit unter Druck stehendem Fluid beaufschlagbar sind, so daß über die Bremsbeläge eine Feststellbremskraft auf die Bremsscheibe ausgeübt wird, wird zum einen auf besonders vorteilhafte Weise eine mechanische, zum Beispiel durch einen Seilzug übertragene Feststellbremskraft vermieden, so daß im Zusammenhang mit einer derartigen Übertragung entstehende Störungen ausgeschlossen sind.

Darüber hinaus ist es besonders vorteilhaft, daß die Feststellbremswirkung durch die ohnehin vorhandenen Komponenten der Fahrzeugbremse erzielbar ist und daher zusätzliche, nur der Feststellbremswirkung dienende Einrichtungen, insbesondere zusätzliche Trommelbremsen entfallen können. Hierdurch werden nicht nur die bei Feststell-Trommelbremsen auftretenden Korrosionserscheinungen vermieden, sondern es wird hierdurch auch die Wartung der Feststellbremse gemeinsam mit der Wartung der Betriebsbremse ermöglicht, so daß zusätzliche Wartungsarbeiten der Feststellbremse entfallen können.

Ein Radbremszylinder, der außer über die Betriebsbremsleitung auch noch über eine Feststellbremsleitung mit unter Druck stehendem Fluid beaufschlagt werden kann, kann auf die unterschiedlichste Art und Weise realisiert werden.

Eine vorteilhafte Ausführungsform sieht vor, daß der Radbremszylinder ein Schaltmittel aufweist, durch welches er abwechselnd mit der Betriebsbremsleitung oder der Feststellbremsleitung verbindbar ist.

Bei einer anderen vorteilhaften Ausführungsform ist vorgesehen, daß der Radbremszylinder zwei koaxial angeordnete Kolben-Zylinder-Einheiten aufweist, deren eine mit der Betriebsbremsleitung und deren andere mit der Feststellbremsleitung verbunden ist.

Bei einer wiederum anderen Ausführungsform ist vorgesehen, daß der Radbremszylinder zwei parallel zueinander angeordnete Kolben-Zylinder-Einheiten aufweist, deren eine mit der Betriebsbremsleitung und deren andere mit der Feststellbremsleitung verbunden ist.

Sämtliche dieser Ausführungsbeispiele ermöglichen die Erzielung einer Feststellbremswirkung durch zusätzliches und separates Ansteuern wenigstens eines Teils der Betriebsbremseinrichtungen eines Fahrzeugs. Die Festellbremse ist hierdurch gewissermaßen ein Teil der Betriebsbremse und macht sich sämtliche Vorteile der Betriebsbremse, beispielsweise einen automatischen Bremsspielausgleich und dgl. zunutze.

Die Erfindung betrifft ferner eine automatische Feststellbremsvorrichtung für ein Fahrzeug unter Verwendung von wenigstens zwei Radbremsen der obenbeschriebenen Art.

Diesbezüglich liegt ihr die Aufgabe zugrunde, eine automatische Feststellbremsvorrichtung zu vermitteln, welche über einen langen Zeitraum weitestgehend störunempfindlich und wartungsarm eine optimale Feststellbremsfunktion ermöglicht.

Diese Aufgabe wird bei einer automatischen Feststellbremsvorrichtung für ein Fahrzeug unter Verwendung von wenigstens zwei Radbremsen der vorbeschriebenen Art erfindungsgemäß gelöst durch eine ansteuerbare Hydraulikpumpe, durch welche die wenigstens zwei Radbremsen über Bremsleitungen mit Druck beaufschlagbar sind, ein der Hydraulikpumpe unmittelbar nachgeschaltetes ansteuerbares Druckhalteventil, wenigstens ein an wenigstens einem Rad und/oder an dem Getriebe des Fahrzeugs angeordneten Sensor zur Erfassung des Bewegungszustands des Fahrzeugs und ein Steuergerät, durch welches abhängig von den Sensorsignalen, die Pumpe und das Druckhalteventiel ansteuerbar sind, wobei bei einem Stillstand des Fahrzeugs mittels der Pumpe und des Druckhalteventils ein kontinuierlich auf die Radbremsen wirkender Bremsdruck erzeugt wird, der abgebaut wird, wenn ein Anrollen des Fahrzeugs durch die Sensoren erfaßt wird.

Durch die Verwendung der vorstehend näher beschriebenen Fahrzeugbremsen, welche hydraulisch ansteuerbar sind, werden Störeinflüsse, die bei bekannten Feststellbremsvorrichtungen durch die Radbremsen und deren Betätigung hervorgerufen werden, praktisch vermieden. Die hydraulische Betätigung der Radbremsen und die Ansteuerung durch das Steuergerät ermöglicht eine weistestgehend störunempfindliche und wartungsarme Funktion der automatischen Feststellbremsvorrichtung.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: schematisch ein erstes Ausführungsbeispiel einer Fahrzeugbremse nach der Erfindung;
- Fig. 2: ein zweites Ausführungsbeispiel einer Fahrzeugbremse nach der Erfindung;
- Fig. 3: ein drittes Ausführungsbeispiel einer Fahrzeugbremse nach der Erfindung und
- Fig. 4: ein Ausführungsbeispiel einer automatischen Feststellbremsvorrichtung nach der Erfindung.

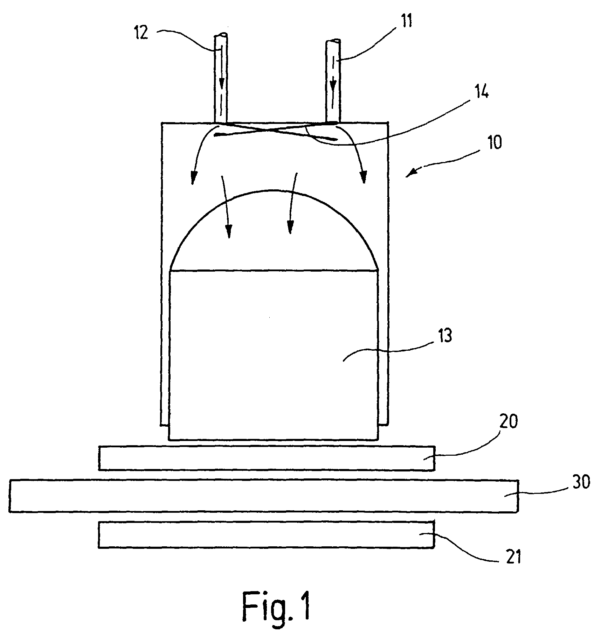

Ein Ausführungsbeispiel einer Fahrzeugbremse, schematisch dargesellt in Fig. 1, umfaßt einen Radbremszylinder 10, der über eine Hauptbremsleitung 11 oder über eine Feststellbremsleitung 12 mit einem unter Druck stehenden Fluid, einer Bremsflüssigkeit, beaufschlagbar ist.

In dem Radbremszylinder 10 ist ein Schaltmittel 14 vorgesehen, durch welches der Radbremszylinder 10 abwechselnd mit der Hauptbremsleitung 11 oder mit der Feststellbremsleitung 12 fluidisch verbindbar ist. Dieses Schaltmittel 14 kann beispielsweise - wie dargestellt - ein wippenartig betätigbares Verschlußelement sein, das abhängig von den Druckverhältnissen in der Hauptbremsleitung 11 und der Feststellbremsleitung 12 das Innere des Radbremszylinders 10 mit der Hauptbremsleitung 11 oder der Feststellbremsleitung 12 zu verbinden ermöglicht.

Der Kolben 13 des Radbremszylinders 10 wirkt auf Bremsbeläge 20, 21, welche eine Bremskraft auf eine Bremsscheibe 30 ausüben. Die beiden Bremsbeläge 20 und 21 sind auf an sich bekannte Weise an einem (nicht dargestellten) Bremssattel so angeordnet, daß sie eine zangenartige Bewegung in bezug auf die Bremsscheibe 30 ausführen.

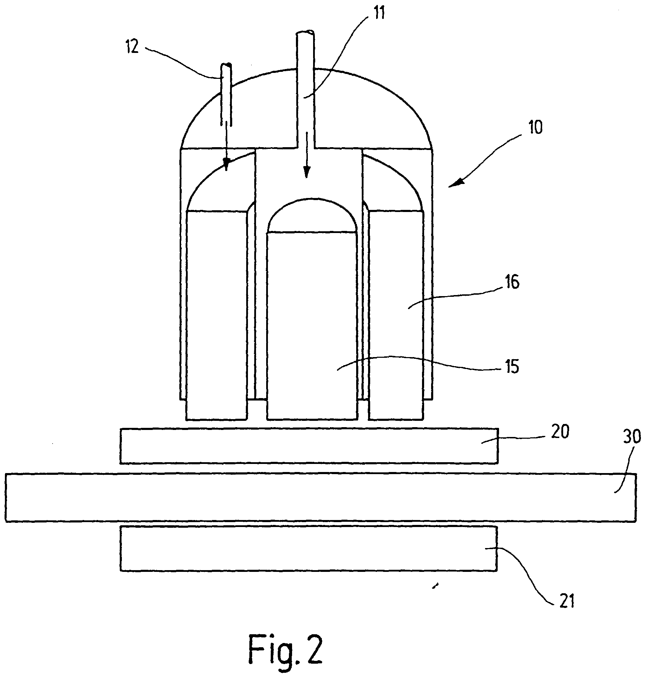

Bei dem in Fig. 2 dargestellten Ausführungsbeispiel umfaßt der Radbremszylinder 10 zwei koaxial angeordnete Kolben-Zylinder-Einheiten, deren beide Kolben 15, 16 eine Bremskraft auf die Bremsbeläge 20, 21 unabhängig voneinander ausüben.

Dabei kann ein Ringkolben 16, wie dargestellt, mit der Feststellbremsleitung 12 verbunden sein, während ein zentral im Ringkolben 16 angeordneter Kolben 15 über eine Hauptbremsleitung 11 mit einem (in Fig. 2 nicht dargestellten) Hauptbremszylinder verbunden ist. Eine Feststellbremswirkung wird bei dieser Ausführungsform dadurch erzielt, daß der Ringkolben 16 über die Feststellbremsleitung 12 mit einem unter Druck stehenden Fluid beaufschlagt wird.

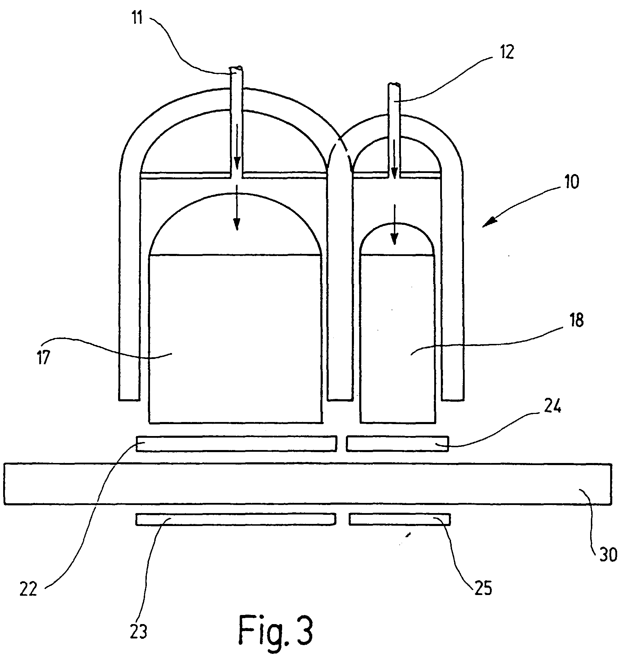

Bei einer in Fig. 3 schematisch dargestellten Fahrzeugbremse umfaßt der Radbremszylinder 10 ebenfalls zwei Kolben-Zylinder-Einheiten, die parallel zueinander angeordnet und miteinander verbunden sind. Die mit der Hauptbremsleitung 11 fluidisch verbundene Kolben-Zylinder-Einheit weist dabei einen Kolben 17 mit einem Durchmesser auf, der größer ist als der Durchmesser eines Kolbens 18 der Kolben-Zylinder-Einheit, die mit der Feststellbremsleitung 12 fluidisch verbunden ist.
Wie in Fig. 3 dargestellt ist, kann die über die Hauptbremsleitung 11 mit Druck beaufschlagbare Kolben-Zylinder-Einheit auf Bremsbeläge 22, 23 wirken, die ausschließlich der Bremswirkung der Betriebsbremse dienen.

Die Kolben-Zylindereinheit, welche über die Feststellbremsleitung 12 mit einem unter Druck stehenden Fluid beaufschlagbar ist, übt in diesem Falle eine Bremskraft auf separat angeordnete Bremsbeläge 24, 25 aus, die ausschließlich der Feststellbremswirkung dienen.

Es versteht sich aber, daß beide Kolben-Zylinder-Einheiten auch auf jeweils nur ein Paar von Bremsbelägen wirken können, die dann sowohl die Bremswirkung der Betriebsbremse als auch diejenige der Feststellbremse ermöglichen.

Der Druck für die Ansteuerung der Feststellbremse über die Feststellbremsleitung 12 kann beispielsweise durch eine Elektropumpe erzeugt werden. Darüber hinaus ist es auch möglich, den Druck durch entsprechende Abzweigungen im Hauptbremszylinder bereitzustellen.

Die oben dargestellten Ausführungsbeispiele weisen den gemeinsamen Vorteil auf, daß die Feststellbremswirkung durch Verwendung einer Scheibenbremse, die Teil der Betriebsbremse des Fahrzeugs ist, erzielt wird. Es sind daher keine zusätzlichen störanfälligen Trommelbremsen zur Sicherung der Feststellbremswirkung notwendig.

Darüber hinaus kann die Feststellbremse auch über Steuereinheiten angesteuert werden, so daß eine automatische Betätigung der Feststellbremse realisierbar ist.

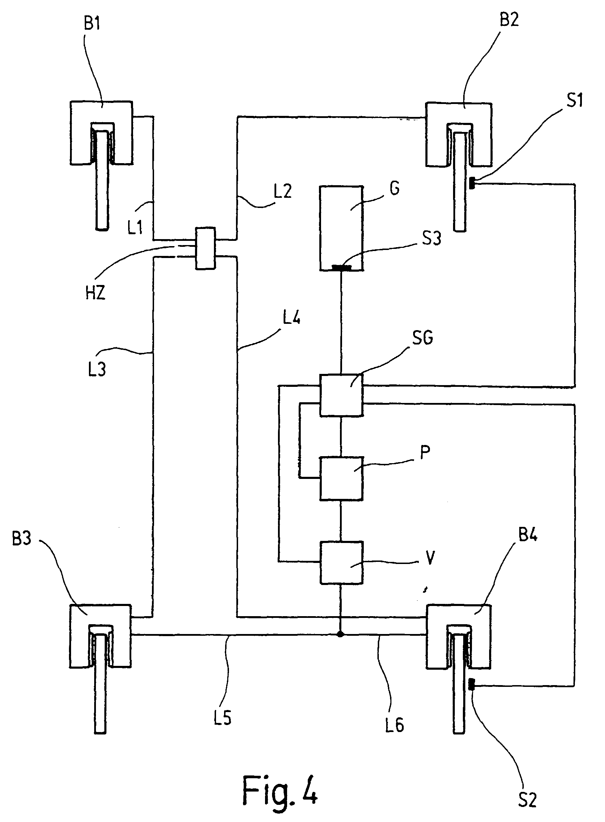

Eine automatische Feststellbremsvorrichtung eines Fahrzeugs ist schematisch in Fig. 4 dargestellt.

Ein Fahrzeug weist vier Radbremsen B1, B2, B3, B4 der obenbeschriebenen Art auf, welche auf an sich bekannte Weise über einen Hauptbremszylinder HZ über Bremsleitungen L1, L2, L3, L4 betätigbar sind.

Zur Erzielung einer automatischen Feststellbremswirkung sind Sensoren an den Rädern (Sensoren S1, S2) und/oder an dem Getriebe G (Sensor S3) angeordnet, welche den Bewegungszustand des Fahrzeugs erfassen.

Die Signale der Sensoren S1, S2, S3 werden an ein Steuergerät SG ausgegeben, durch welches eine Hydraulikpumpe P sowie ein Druckhalteventil V ansteuerbar sind.

Durch die Hydraulikpumpe P werden über das Druckhalteventil V über Feststellbremsleitungen L5, L6 die Radbremsen B3, B4 mit einem Druck beaufschlagt.

Die Funktion der in Fig. 4 dargestellten automatischen Feststellbremsvorrichtung ist folgende:

Durch die Sensoren S1, S2, S3 wird erfaßt, ob das Fahrzeug stillsteht oder sich bewegt. Steht das Fahrzeug still, wird von dem Steuergerät SG die Pumpe P angesteuert, welche in dem Feststellbremskreis einen Druck erzeugt, durch welchen die Bremsen B3, B4 betätigt werden. Dieser Druck wird durch das Druckhalteventil V in dem Feststellbremskreislauf, d.h. den Feststellbremsleitungen L5, L6 und den Radbremsen B3, B4 aufrechterhalten. Sobald sich das Fahrzeug zu bewegen beginnt, wird ebenfalls durch die Sensoren S1, S2, S3 durch Ansteuern des Druckhalteventils V der Druck in den Feststellbremsleitungen L5, L6 und damit den Radbremsen B3, B4 abgebaut, so daß sich die Radbremsen B3, B4 lösen. Durch eine derartige automatische Feststellbremsvorrichtung ist eine Betätigung der Feststellbremsen durch den Fahrer nicht erforderlich.

Die Pumpe P stellt darüber hinaus auch den in dem Feststellbremskreis erforderlichen Bremsdruck sicher. Dabei wird auf an sich bekannte Weise der Druck in den Feststellbremsleitungen L5, L6 erfaßt und die Pumpe dann eingeschaltet, wenn dieser Druck unter einen vorgegebenen Grenzwert fällt. Bei Überschreiten eines weiteren Grenzwertes wird die Pumpe selbsttätig abgeschaltet.

## Patentansprüche

1. Fahrzeugbremse umfassend eine Bremsscheibe (30) und wenigstens einen über eine Betriebsbremsleitung (11) mit einem Hauptbremszylinder fluidisch verbundenen Radbremszylinder (10), der durch Beaufschlagung mit einem unter Druck stehenden Fluid über Bremsbeläge (20, 21; 22, 23; 24, 25) eine Bremskraft auf die Bremsscheibe (30) ausübt, dadurch gekennzeichnet, daß eine weitere von der Betriebsbremsleitung (11) getrennte Feststellbremsleitung (12) vorgesehen ist, über welche der wenigstens eine Radbremszylinder (10) oder wenigstens ein weiterer zusätzlicher Radbremszylinder bei Betätigung einer Feststellbremseinrichtung mit unter Druck stehendem Fluid derart beaufschlagbar ist, daß über die Bremsbeläge (20, 21; 22, 23) oder über zusätzliche Bremsbeläge (24, 25) eine Feststellbremskraft auf die Bremsscheibe (30) ausgeübt wird.

2. Fahrzeugbremse nach Anspruch 1, dadurch gekennzeichnet, daß der Radbremszylinder (10) ein Schaltmittel (14) aufweist, durch welches er abwechselnd mit der Betriebsbremsleitung (11) oder der Feststellbremsleitung (12) verbindbar ist.

3. Fahrzeugbremse nach Anspruch 1, dadurch gekennzeichnet, daß der Radbremszylinder (10) zwei koaxial angeordnete Kolben-Zylinder-Einheiten aufweist, deren eine mit der Betriebsbremsleitung (11) und deren andere mit der Feststellbremsleitung (12) verbunden ist.

4. Fahrzeugbremse nach Anspruch 1, dadurch gekennzeichnet, daß der Radbremszylinder (10) zwei parallel zueinander angeordnete Kolben-Zylinder-Einheiten aufweist, deren eine mit der Betriebsbremsleitung (11) und deren andere mit der Feststellbremsleitung (12) verbunden ist.

5. Automatische Feststellbremsvorrichtung für ein Fahrzeug unter Verwendung von wenigstens zwei Radbremsen nach den voranstehenden Ansprüchen, gekennzeichnet durch
- eine ansteuerbare Hydraulikpumpe (P), durch welche die wenigstens zwei Radbremsen (B3, B4) über Feststellbremsleitungen (L5, L6) mit Druck beaufschlagbar sind,
- ein der Hydraulikpumpe (P) unmittelbar nachgeschaltetes ansteuerbares Druckhalteventil (V), durch welches ein Druck in den Bremsleitungen (L5, L6) aufrechterhaltbar und abbaubar ist,
- wenigstens ein an wenigstens einem Rad und/oder an dem Getriebe (G) des Fahrzeugs angeordneter Sensor (S1, S2, S3) zur Erfassung des Bewegungszustandes des Fahrzeugs und
- ein Steuergerät (SG), durch welches abhängig von den Sensorsignalen die Hydraulikpumpe (P) und das Druckhalteventil (V) ansteuerbar sind,
- wobei bei einem Stillstand des Fahrzeugs durch die Pumpe und das Druckhalteventil ein kontinuierlicher auf die Radbremsen (B3, B4) wirkender Bremsdruck erzeugt wird,
- der abgebaut wird, wenn durch die Sensoren (S1, S2, S3) ein Anrollen des Fahrzeugs erfaßt wird.
